# EUROPEAN PATENT APPLICATION

(11) **EP 4 806 735 A1**
(43) Date of publication of application: **16.09.2026**
(21) Application number: 26151381.6
(22) Date of filing: 12.01.2026
(51) Int. Cl.: B60R 25/24

(54) **VEHICULAR KEY SYSTEM**

(30) Priority: 13.03.2025 JP 2025040457
(71) Applicant: Minebea AccessSolutions Inc., Miyazaki-shi, Miyazaki 880-0293 (JP)
(72) Inventor: NAGASAKA, Genki, MIYAZAKI, 880-0293 (JP)
(74) Representative: Chimini, Francesco

(57) **Abstract**

In a vehicular key system (100) including a mobile device (1) carried by a user, and a control device (22) mounted on a vehicle (10) and configured to communicate with the mobile device (1) by wireless, the control device (22) determining whether to unlock the vehicle (10) based on a result of an authentication process, and determining whether the mobile device (1) is present in a communicable area in which communication with the vehicle (10) is feasible by determining whether the communication with the mobile device (1) is established, the control device (22) determines whether the communication with the mobile device (1) can be established, sets a flag to ON when it is determined that the communication with the mobile device (1) is not established, executes the authentication process while the flag is set to ON, then permits the start of a prime mover (24) when the authentication process is successful, and does not permit the start of the prime mover (24) when the authentication process is unsuccessful.

## Description

### BACKGROUND

### Technical Field

The present invention relates to a vehicular key system.

### Background Art

JP 2004-114860 A discloses a vehicular electronic key system configured to output a warning when a user drops an electronic key while the vehicle is stopped or traveling. The vehicular electronic key system includes a control device mounted on an actual vehicle and an electronic key for transmitting a response signal based on reception of a request signal from the control device, and outputs a warning for notifying the loss of the electronic key when the response signal is not detected.

In the above-mentioned vehicular electronic key system, when a user turns on a start switch, a request signal is transmitted from the control device, and communication with the electronic key is started. The electronic key transmits a response signal when receiving the request signal. The control device verifies ID data included in the response signal, and when the ID data agrees with the data for comparison, the control device releases a locked state of the steering wheel, and the vehicle is brought into an engine start permission state. Further, when the user turns on the main switch, the control device transmits a request signal, similarly to the time of turning on the start switch, and verifies the ID data included in the response signal transmitted from the electronic key; then, when the ID data agrees with the data for comparison, the control device starts the engine, and the vehicle is brought into a state of readiness for traveling.

### SUMMARY

In the above-described vehicular electronic key system, since the ID data is verified not only when the start switch is turned on but also when the main switch is turned on, it takes time to make the engine of the vehicle start, and the convenience for the user is degraded. On the other hand, in a case where the verification of the ID data is omitted when the main switch is turned on, there arises a risk of theft committed by a third party who is not an authorized owner of the electronic key, and the anti-theft mechanism is damaged.

The present invention has been made in view of the above problems, and provides a vehicular key system having an excellent anti-theft mechanism while improving the convenience.

The present invention provides a vehicular key system, as a scheme to solve the above-mentioned problems, that includes: a mobile device carried by a user; and a control device mounted on a vehicle and configured to communicate with the mobile device by wireless, the control device
executing an authentication process for verifying unique information of the mobile device to determine whether to unlock the vehicle based on a result of the authentication process, and
determining whether the mobile device is present in a communicable area in which communication with the vehicle is feasible by determining whether the communication with the mobile device is established, and outputting an alarm when it is determined that the mobile device is not present in the communicable area, wherein
the control device
permits start of a prime mover without executing the authentication process for a prescribed period, after the authentication process executed for unlocking the vehicle is successful,
determines, after the prescribed period has elapsed, whether the communication with the mobile device is established, and sets a flag to ON when it is determined that the communication with the mobile device is not established, and
executes the authentication process while the flag is set to ON, permits the start of the prime mover when the authentication process is successful, and does not permit the start of the prime mover when the authentication process is unsuccessful.

According to the above configuration, the control device permits the start of the prime mover without executing the authentication process for the prescribed time after the authentication process executed for unlocking has been successful, sets the flag to ON when the communication with the mobile device is not established in a case where the prescribed time has elapsed, executes the authentication process of the mobile device while the flag is ON, that is, while the communication with the mobile device is not established, permits the start of the prime mover when the authentication process is successful, and does not permit the start of the prime mover when the authentication process is unsuccessful. Thus, according to the above configuration, it is possible to enhance the anti-theft mechanism while improving the convenience.

The vehicular key system may further include an operation input unit that is mounted on the vehicle and receives an operation instruction by a user, and the control device may check a state of the flag when the operation input unit is operated and set to a prime mover start permission position.

According to the above configuration, the state of the flag is checked in a state where the prime mover can be started, thereby making it possible to appropriately determine whether the prime mover can be started.

The control device may set the flag to OFF when the vehicle is brought into a locked state.

According to the above configuration, when the vehicle is unlocked after being locked, the flag is set to OFF. Therefore, the prime mover can be started without executing the authentication process until the prescribed time elapses after the vehicle is unlocked. This can reduce a time lag before the prime mover is started.

The flag may be set to OFF when it is determined that the communication with the mobile device is established, and the start of the prime mover may be permitted without executing the authentication process while the flag is set to OFF.

According to the above configuration, when the communication is established from the state of being not established, the prime mover can be started without executing the authentication process, thereby making it possible to reduce a time lag before the prime mover is started.

According to the vehicular key system of the present invention, the anti-theft mechanism can be enhanced while improving the convenience.

### BRIEF DESCRIPTION OF DRAWINGS

FIG. 1 is a schematic configuration diagram of a vehicular key system according to an embodiment.
FIG. 2 is a block diagram illustrating a configuration of the vehicular key system according to the embodiment.
FIG. 3A is a flowchart illustrating the first half of a key drop determination process according to the embodiment.
FIG. 3B is a flowchart illustrating the second half of the key drop determination process according to the embodiment.
FIG. 4 is a conceptual diagram of a process when an engine is started according to the embodiment.
FIG. 5 is a flowchart illustrating a process when an engine is started according to the embodiment.

### DETAILED DESCRIPTION

Hereinafter, a vehicular key system 100 according to an embodiment of the present invention will be described with reference to the drawings. In the present embodiment, a motorcycle (motorbike) in which a prime mover is an engine (internal combustion engine) will be described as an example of a vehicle 10, to which the vehicular key system 100 is applied. Note that the vehicular key system 100 is also applicable to an electric vehicle in which the prime mover is a motor (electric motor), or a hybrid vehicle including an engine and a motor. The present invention is also applicable to automobiles other than two-wheel vehicles, such as three-wheel vehicles and four-wheel vehicles. Further, the application of the vehicle key system 100 is not specifically limited to automobiles; it can be applied to any mobility vehicle, whether a passenger or non-passenger type. The same or corresponding constituent elements are denoted by the same reference signs throughout the drawings, and redundant detailed description thereof will be omitted.

### Overall Configuration

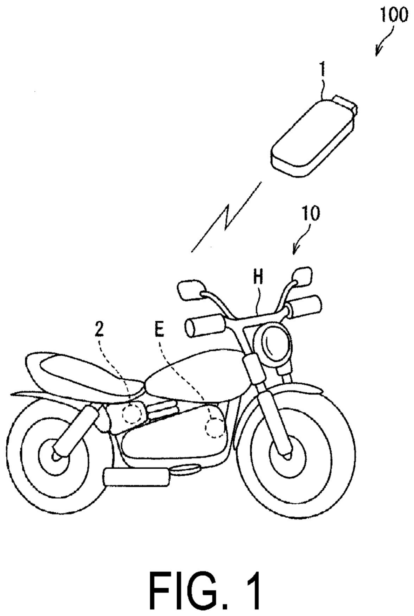

Referring to FIG. 1, the vehicular key system 100 includes an electronic key 1 (an example of a mobile device) carried by a user, and a vehicle-mounted device 2 mounted on a vehicle 10. The electronic key 1 and the vehicle-mounted device 2 can communicate with each other by wireless. The vehicle-mounted device 2 periodically communicates with the electronic key 1 while the vehicle 10 is stopped or traveling, and determines whether the communication with the electronic key 1 is established, thereby determining whether the electronic key 1 is present in a communicable area with the vehicle-mounted device 2. When the vehicle-mounted device 2 determines that the electronic key 1 is not present in the communicable area, the vehicle-mounted device 2 outputs an alarm for notifying that the electronic key 1 has been dropped.

### Electronic Key

In the present embodiment, the electronic key is carried by a user to lock/unlock the vehicle 10. The description of the present embodiment will be given in which a smart key carried by a user is taken as an example of the electronic key 1. However, the electronic key 1 may be an electronic apparatus such as a smartphone or a tablet terminal other than a smartphone.

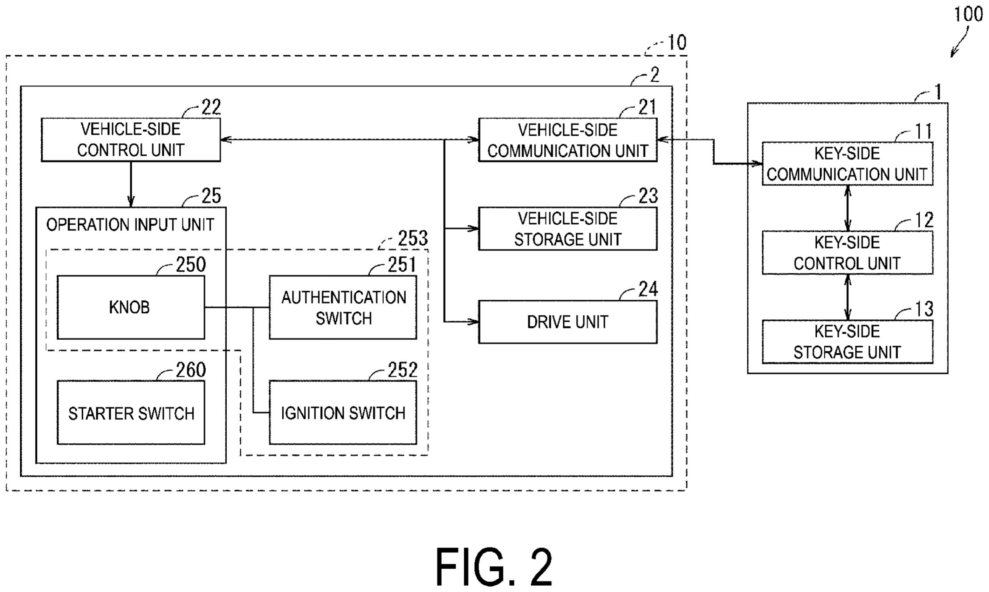

As illustrated in FIG. 2, the electronic key 1 includes a key-side communication unit 11, a key-side control unit 12, and a key-side storage unit 13.

The key-side communication unit 11 is configured to communicate with the vehicle-mounted device 2. The key-side communication unit 11 is a communication module including a radio frequency (RF) transmitting antenna capable of transmitting an RF signal. The key-side communication unit 11 may further include a modulator, a demodulator, an amplifier, and the like. In the present embodiment, the key-side communication unit 11 transmits an RF signal including unique information (hereinafter referred to as ID information) unique to the electronic key 1 as a radio wave of a specific frequency.

The key-side control unit 12 is constituted by a processor such as a central processing unit (CPU) or a micro processing unit (MPU). The key-side control unit 12 controls operations of the key-side communication unit 11. Specifically, the key-side control unit 12 is connected to the key-side communication unit 11 in such a manner as to be able to transmit/receive signals, and performs generation of a signal to be transmitted by the key-side communication unit 11, analysis of a signal received by the key-side communication unit 11, control of a communication timing of the key-side communication unit 11, and the like.

The key-side storage unit 13 is constituted by a memory such as a random access memory (RAM) or a read only memory (ROM). The key-side storage unit 13 stores information necessary for processing by the key-side control unit 12 and the vehicle-mounted device 2. In the present embodiment, the key-side storage unit 13 stores the ID information. The ID information is transmitted to the vehicle-mounted device 2 via the key-side communication unit 11 and is used for an authentication process in the vehicle-mounted device 2.

### Vehicle-Mounted Device

The vehicle-mounted device 2 includes a vehicle-side communication unit 21, a vehicle-side control unit 22 (an example of a control device), and a vehicle-side storage unit 23. The vehicle-mounted device 2 further includes a drive unit 24 and an operation input unit 25.

The vehicle-side communication unit 21 includes an RF signal receiving antenna capable of receiving an RF signal and a low frequency (LF) signal transmitting antenna capable of transmitting an LF signal. The vehicle-side communication unit 21 may further include a modulator, a demodulator, an amplifier, and the like. The vehicle-side communication unit 21 transmits an LF signal from the LF signal transmitting antenna when a specific operation (for example, a pushing operation of the operation input unit 25) is performed on the operation input unit 25. The electronic key 1 transmits an RF signal when the LF signal is received. When the vehicle-side communication unit 21 (RF signal receiving antenna) receives the RF signal transmitted from the electronic key 1, the vehicle-side communication unit 21 outputs the RF signal to the vehicle-side control unit 22.

The vehicle-side control unit 22 is constituted by a plurality of electronic control units (ECUs). The plurality of ECUs include a smart ECU and an engine ECU. The vehicle-side control unit 22 may be constituted by one ECU.

The vehicle-side control unit 22 is constituted by a processor such as a CPU or an MPU. The vehicle-side control unit 22 cooperates with software to enable a predetermined function and control the operations of the vehicle-side communication unit 21. For example, the vehicle-side control unit 22 generates a signal to be transmitted by the vehicle-side communication unit 21, analyzes a signal received by the vehicle-side communication unit 21, controls a communication timing of the vehicle-side communication unit 21, and the like. The vehicle-side control unit 22 is connected to each unit of the vehicle-mounted device 2 in such a manner as to be able to transmit/receive signals (data).

In the present embodiment, the vehicle-side control unit 22 determines whether the authentication process is successful by verifying the ID information included in the RF signal transmitted from the electronic key 1. Specifically, the vehicle-side control unit 22 determines that the authentication process has succeeded when determining that the ID information transmitted from the electronic key 1 matches ID information stored in the vehicle-side storage unit 23 (matching ID information is stored in the vehicle-side storage unit 23), and determines that the authentication process has failed when determining that the ID information does not match the ID information stored in the vehicle-side storage unit 23 (matching ID information is not stored in the vehicle-side storage unit 23).

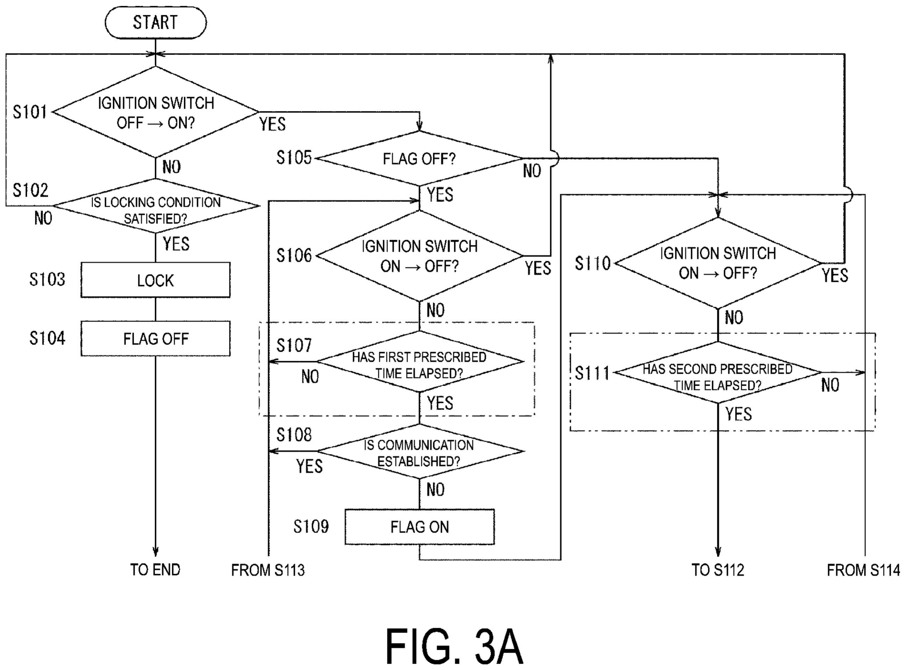

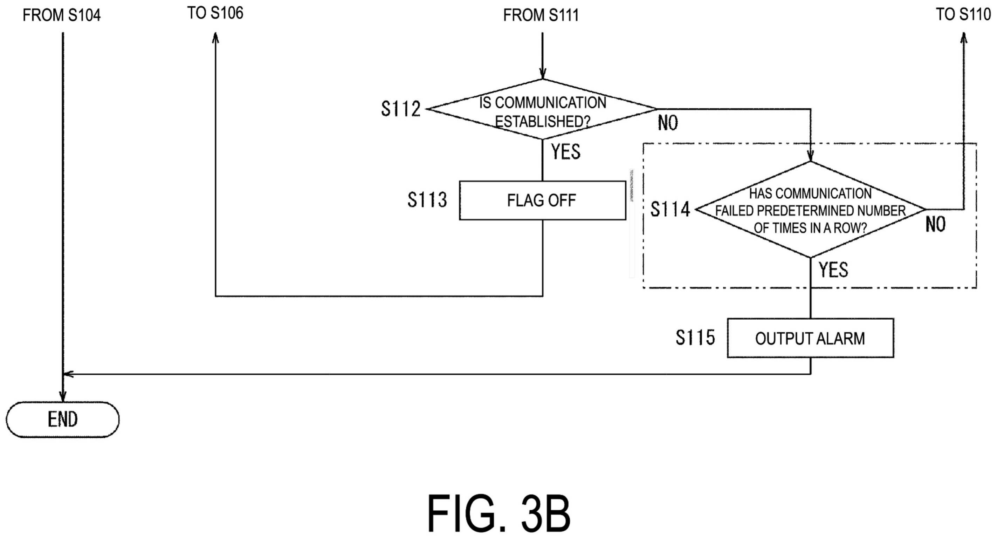

Further, in the present embodiment, the vehicle-side control unit 22 executes a key drop determination process (see FIGS. 3A and 3B) for issuing an alarm in the case of the electronic key 1 being dropped. In the key drop determination process, the vehicle-side control unit 22 periodically transmits a signal and periodically determines whether the communication with the electronic key 1 is feasible, thereby determining whether the electronic key 1 is present in the area where the communication with the vehicle 10 is feasible. An interval of the determination of whether the communication with the electronic key 1 is feasible (whether the communication is established) can be optionally set, and is, for example, 10 seconds.

In the present embodiment, in the determination of whether the communication with the electronic key 1 is established, the vehicle-side control unit 22 transmits an LF signal from the LF signal transmitting antenna, and then verifies the ID indicated by an RF signal transmitted from the electronic key 1, thereby determining whether the communication with the electronic key 1 is established, as in the authentication process. Specifically, the vehicle-side control unit 22 determines whether the ID information transmitted from the electronic key 1 matches the ID information stored in the vehicle-side storage unit 23. The vehicle-side control unit 22 determines that the communication with the electronic key 1 is established when determining that the ID information transmitted from the electronic key 1 matches the ID information stored in the vehicle-side storage unit 23 of the vehicle-mounted device 2 (matching ID information is stored in the vehicle-side storage unit 23). On the other hand, when the vehicle-side control unit 22 determines that the ID information transmitted from the electronic key 1 does not match the ID information stored in the vehicle-side storage unit 23 of the vehicle-mounted device 2 (matching ID information is not stored in the vehicle-side storage unit 23) or that the RF signal is not received from the electronic key 1, the vehicle-side control unit 22 determines that the communication with the electronic key 1 is not established.

The vehicle-side storage unit 23 is constituted by a memory such as a ROM or a RAM. The vehicle-side storage unit 23 stores a program of the process executed by the vehicle-side control unit 22 and information necessary for the process executed by the vehicle-side control unit 22. For example, the vehicle-side storage unit 23 stores the ID information of the electronic key 1, which is set in advance for using the vehicle 10. The vehicle-side storage unit 23 may store ID information of a plurality of the electronic keys 1.

The drive unit 24 includes an engine E (see FIG. 1), which is an example of a power source, and a cell motor (not illustrated).

The operation input unit 25 includes a knob 250 and a starter switch 260 for receiving an operation instruction by a user. An authentication switch 251 for performing the authentication process between the vehicle 10 and the electronic key 1 and an ignition switch 252 for turning on a power supply of the vehicle 10 are activated by operating the knob 250, and the engine E can be switched to a start state or a stop state by operating the starter switch 260. The vehicle-mounted device 2 includes a handlebar locking device 253 configured to switch the handlebar H illustrated in FIG. 1 between a locked state and an unlocked state. The handlebar locking device 253 includes the knob 250, the authentication switch 251, and the ignition switch 252.

The authentication switch 251 is activated by, for example, a pushing operation of the knob 250 provided in the operation input unit 25. When the authentication process between the vehicle 10 and the electronic key 1 is successful, the knob 250 is unlocked. This enables the knob 250 to be rotationally operated (the vehicle 10 is brought into the unlocked state). When the knob 250 is rotationally operated from a lock position to an ignition-OFF position, the handlebar H of the vehicle 10 is switched from the locked state to the unlocked state. On the other hand, when the knob 250 is rotationally operated from the ignition-OFF position to the lock position, the handlebar H of the vehicle 10 is switched from the unlocked state to the locked state. This makes the knob 250 become locked (the vehicle 10 is brought into the locked state).

The ignition switch 252 is configured to be switched by, for example, a rotation operation of the knob 250 included in the operation input unit 25. The ignition switch 252 is configured to switch on/off the power supply of the vehicle 10 by shifting between an OFF position and an ON position. When the knob 250 is further rotated from the ignition-OFF position to the ignition-ON position, the ignition switch 252 comes to the ON position, and the power supply of the vehicle 10 is turned on. The ignition-ON position is an example of the prime mover start permission position.

The starter switch 260 is disposed, for example, on the handlebar of the vehicle 10. The starter switch 260 is configured to switch the engine E between the start state and the stop state by shifting between an OFF position and an ON position. When a first condition described below is satisfied and the starter switch 260 shifts from the OFF position to the ON position, the engine E of the vehicle 10 is started. Alternatively, when a second condition described below is satisfied and the starter switch 260 shifts from the OFF position to the ON position, the authentication process is executed; then, when the authentication process is successful, the engine E of the vehicle 10 is started.

### Key Drop Determination Process

Next, the key drop determination process executed by the vehicle-side control unit 22 will be described with reference to FIGS. 3A and 3B. The key drop determination process is started when the authentication process of the electronic key 1 executed by the vehicle-side control unit 22 is successful and the knob 250 is brought into the unlocked state. The key drop determination process is repeatedly executed while the knob 250 is in the unlocked state regardless of whether the vehicle 10 is stopped or traveling, and ends when an alarm notifying that the electronic key 1 has been dropped is given or the knob 250 is brought into the locked state. Information indicating the state (ON or OFF) of a flag used in the key drop determination process is stored in the vehicle-side storage unit 23, and the flag is set to OFF in the initial state (when the key drop determination process is started).

As illustrated in FIG. 3A, the vehicle-side control unit 22 determines whether the ignition switch 252 has shifted from the OFF position to the ON position (step S101). When the vehicle-side control unit 22 determines that the ignition switch 252 is not at the ON position, that is, the ignition switch 252 is still at the OFF position (step S101; NO), the vehicle-side control unit 22 determines whether a locking condition is satisfied (step S102). The locking condition is at least one of a condition that a preset time (for example, 30 seconds) has elapsed since the knob 250 was unlocked or a condition that the authentication process of the electronic key 1 has failed.

When the vehicle-side control unit 22 determines that the locking condition is satisfied (step S102; YES), the vehicle-side control unit 22 sets the knob 250 to the locked state (step S103), sets the flag to OFF (step S104), and ends the key drop determination process.

On the other hand, when the vehicle-side control unit 22 determines that the locking condition is not satisfied (step S102; NO), the key drop determination process returns to step S101.

In step S101, when the vehicle-side control unit 22 determines that the ignition switch 252 is at the ON position (step S101; YES), the vehicle-side control unit 22 determines whether the flag is set to OFF (step S105). That is, when the ignition switch 252 is operated to be at the ON position, the vehicle-side control unit 22 checks the state of the flag.

When the vehicle-side control unit 22 determines that the flag is set to OFF (step S105; YES), the vehicle-side control unit 22 determines whether the ignition switch 252 has shifted from the ON position to the OFF position (step S106). When the vehicle-side control unit 22 determines that the ignition switch 252 is at the OFF position (step S106; YES), the key drop determination process returns to step S101.

When the vehicle-side control unit 22 determines that the ignition switch 252 is not at the OFF position, that is, the ignition switch 252 is at the ON position (step S106; NO), the vehicle-side control unit 22 determines whether a first prescribed time defined in advance has elapsed since the ignition switch 252 came to the ON position (step S107). The first prescribed time can be set optionally, and is, for example, 10 seconds.

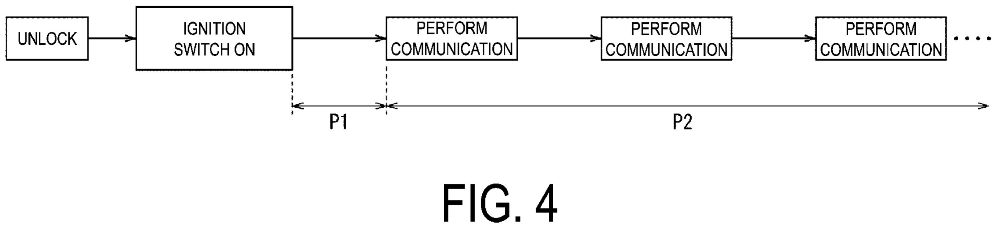

When the starter switch 260 has shifted from the OFF position to the ON position in step S107, the vehicle-side control unit 22 permits the engine E to be started without the authentication process of the electronic key 1 needed to be executed. The condition to be satisfied for executing the processing in step S107 corresponds to the first condition described above. Hereinafter, a period from when the first prescribed time has elapsed for the first time since the ignition switch 252 was turned on to when the first determination of whether the communication with the electronic key 1 is established is started is referred to as a first period P1 (see FIG. 4). The first period P1 is an example of the prescribed period.

When the vehicle-side control unit 22 determines that the first prescribed time has not elapsed yet (step S107; NO), the key drop determination process returns to step S106.

On the other hand, when the vehicle-side control unit 22 determines that the first prescribed time has elapsed (step S107; YES), the vehicle-side control unit 22 determines whether the communication with the electronic key 1 is established (step S108).

When the vehicle-side control unit 22 determines that the communication with the electronic key 1 is established (step S108; YES), the key drop determination process returns to step S106.

On the other hand, when the vehicle-side control unit 22 determines that the communication with the electronic key 1 is not established (step S108; NO), that is, the communication with the electronic key 1 is not successful, the vehicle-side control unit 22 sets the flag to ON (step S109).

When the vehicle-side control unit 22 sets the flag to ON (step S109) and also when the vehicle-side control unit 22 determines that the flag is not set to OFF (step S105; NO), it is determined whether the ignition switch 252 has been switched from ON to OFF (step S110). When the vehicle-side control unit 22 determines that the ignition switch 252 is at the OFF position (step S110; YES), the key drop determination process returns to step S101.

On the other hand, when the vehicle-side control unit 22 determines that the ignition switch 252 is not at the OFF position, that is, the ignition switch is at the ON position (step S110; NO), the vehicle-side control unit 22 determines whether a second prescribed time has elapsed since the most recently executed (the last executed) determination of whether the communication with the electronic key 1 was established (step S111). The second prescribed time can be set optionally, and is, for example, 10 seconds.

When the starter switch 260 shifts from the OFF position to the ON position in step S111, the vehicle-side control unit 22 executes the authentication process with the electronic key 1, and permits the engine E to be started when it is determined that the authentication process is successful. On the other hand, when the vehicle-side control unit 22 determines that the authentication process with the electronic key 1 is unsuccessful, the vehicle-side control unit 22 does not permit the start of the engine E. The condition to be satisfied from when the key drop determination process is started to when the processing in step S111 is started corresponds to the second condition described above. Hereinafter, a period from when the first period P1 has elapsed without the starter switch 260 coming to the ON position to when an alarm notifying that the electronic key 1 has been dropped is given or the knob 250 is locked is referred to as a second period P2 (see FIG. 4).

When the vehicle-side control unit 22 determines that the second prescribed time has not elapsed yet (step S111; NO), the key drop determination process returns to step S110.

On the other hand, when the vehicle-side control unit 22 determines that the second prescribed time has elapsed (step S111; YES), the vehicle-side control unit 22 determines whether the communication with the electronic key 1 is established (step S112).

When the vehicle-side control unit 22 determines that the communication with the electronic key 1 is established (step S112; YES), the flag is set to OFF (step S113) and the key drop determination process returns to step S106.

On the other hand, when the vehicle-side control unit 22 determines that the communication with the electronic key 1 is not established (step S112; NO), the vehicle-side control unit 22 determines whether the communication with the electronic key 1 is not established a predetermined number of times in a row (step S114). The predetermined number of times can be set optionally, and is, for example, five times.

When the vehicle-side control unit 22 determines that the non-establishment of communication with the electronic key 1 does not occur the predetermined number of times in a row, that is, the number of times communication is not established is less than the predetermined number of times (step S114; NO), the key drop determination process returns to step S110.

On the other hand, when the vehicle-side control unit 22 determines that the communication with the electronic key 1 is not established the predetermined number of times in a row (step S114; YES), the vehicle-side control unit 22 outputs an alarm notifying that the electronic key 1 has been dropped (step S115) and ends the key drop determination process.

In the key drop determination process, as illustrated in FIG. 4, the vehicle-side control unit 22, after the authentication process for unlocking the knob 250 is successful, starts the key drop determination process and executes different processing (hereinafter referred to as an engine start permission determination process) at the time of start permission determination of the engine E included in the vehicle 10 (see FIG. 1) in accordance with the periods (the first period P1 and the second period P2) after the ignition switch 252 is turned on.

### Engine Start Permission Determination Process

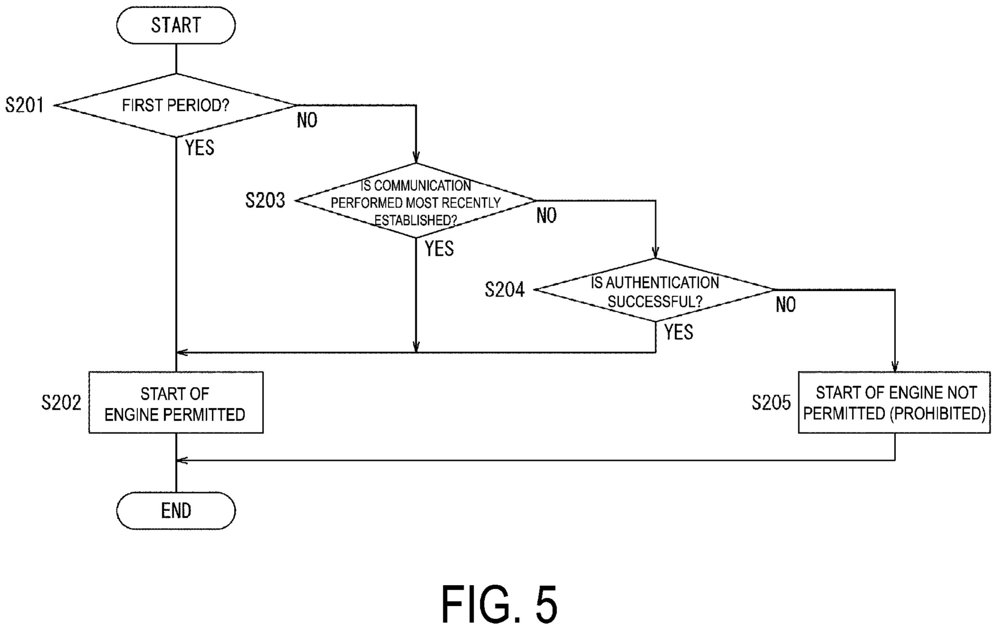

Specifically, as illustrated in FIG. 5, when the starter switch 260 comes to the ON position, the vehicle-side control unit 22 determines whether the process is in the first period P1 depicted in FIG. 4 (the period in which the first prescribed time has not elapsed yet for the first time since the ignition switch 252 was turned on) (step S201); then, when it is determined that the process is in the first period P1 (step S201; YES), the vehicle-side control unit 22 permits the start of the engine E without executing the authentication process (step S202).

On the other hand, when the vehicle-side control unit 22 determines that the process is not in the first period P1, that is, the process is in the second period P2 (step S201; NO), the vehicle-side control unit 22 determines whether the communication performed most recently between the electronic key 1 and the vehicle-mounted device 2 is successful among the communications repeatedly executed every first prescribed time or every second prescribed time (hereinafter referred to as periodic communications) in the key drop determination process (step S203). In the present embodiment, as described above, the vehicle-side control unit 22 sets the flag to ON when the communication with the electronic key 1 performed most recently is not established in the periodic communications, and sets the flag to OFF when the communication with the electronic key 1 performed most recently is established in the periodic communications. Thus, the vehicle-side control unit 22 determines whether the communication with the electronic key 1 performed most recently is established by checking the state of the flag.

When the flag is set to OFF, that is, when the vehicle-side control unit 22 determines that the communication between the electronic key 1 and the vehicle-mounted device 2 performed most recently is established (step S203; YES), the vehicle-side control unit 22 permits the start of the engine E without executing the authentication process (step S202).

On the other hand, when the flag is set to ON, that is, when the vehicle-side control unit 22 determines that the communication between the electronic key 1 and the vehicle-mounted device 2 performed most recently is not established (step S203; NO), the vehicle-side control unit 22 executes the authentication process (step S204). When it is determined that the authentication process is successful (step S204; YES), the vehicle-side control unit 22 permits the start of the engine (step S202). On the other hand, when it is determined that the authentication process is unsuccessful (step S204; NO), the vehicle-side control unit 22 does not permit the start of the engine (step S205).

That is, when the starter switch 260 is at the ON position during the first period P1 after the authentication process executed to unlock the knob 250 is successful, the vehicle-side control unit 22 permits the start of the engine E without executing the authentication process. When the starter switch 260 comes to the ON position in the second period P2 after the first period P1 has elapsed, the vehicle-side control unit 22 determines whether the communication between the electronic key 1 and the vehicle-mounted device 2 performed most recently is established among the periodic communications repeatedly executed in the key drop determination process.

When the communication with the electronic key 1 performed most recently is not established in the periodic communications, the vehicle-side control unit 22 executes the authentication process of the electronic key 1 when the starter switch 260 comes to the ON position, and permits the start of the engine E when the authentication process is successful. In a case where the authentication process that is executed when the communication with the electronic key 1 performed most recently is not established in the periodic communications fails, the vehicle-side control unit 22 does not permit (prohibits) the start of the engine E.

In the present embodiment, as described above, the vehicle-side control unit 22 sets the flag to ON when the communication with the electronic key 1 performed most recently is not established in the periodic communications, and sets the flag to OFF when the communication with the electronic key 1 performed most recently is established in the periodic communications.

Therefore, when the starter switch 260 comes to the ON position while the flag is set to ON, the vehicle-side control unit 22 executes the authentication process of the electronic key 1, permits the start of the engine E when the authentication process is successful, and does not permit (prohibits) the start of the engine E when the authentication process fails.

### Effects of Embodiment

As described thus far, according to the vehicular key system 100 of the present embodiment, the vehicle-side control unit 22 permits the start of the engine E without executing the authentication process in the first period P1 after the authentication process executed for unlocking has succeeded, sets the flag to ON when the communication with the electronic key 1 is not established in the second period P2 after the first period P1 has elapsed, and executes the authentication process of the electronic key 1 while the flag is ON, that is, while the communication with the electronic key 1 is not established. The vehicle-side control unit 22 permits the start of the engine E when the authentication process is successful, and does not permit the start of the engine E when the authentication process fails. This makes it possible to ensure security while reducing the time required to start the engine E. Thus, according to the embodiment described above, the anti-theft mechanism can be enhanced while improving the convenience.

### Variation

In the above embodiment, a case has been described in which the first period P1 is the time starting from when the ignition switch 252 is set to ON, that is, the starting point of the first period P1 is a timing at which the ignition switch 252 is set to ON, but the starting point of the first period P1 may be a timing at which the vehicle-side control unit 22 determines that the authentication process for unlocking the knob 250 is successful.

## Claims

1. A vehicular key system, comprising:
a mobile device carried by a user; and
a control device mounted on a vehicle and configured to communicate with the mobile device by wireless, the control device
executing an authentication process for verifying unique information of the mobile device to determine whether to unlock the vehicle based on a result of the authentication process, and
determining whether the mobile device is present in a communicable area in which communication with the vehicle is feasible by determining whether the communication with the mobile device is established, and outputting an alarm when it is determined that the mobile device is not present in the communicable area, wherein
the control device
permits start of a prime mover without executing the authentication process for a prescribed period, after the authentication process executed for unlocking the vehicle is successful,
determines, after the prescribed period has elapsed, whether the communication with the mobile device is established, and sets a flag to ON when it is determined that the communication with the mobile device is not established, and
executes the authentication process while the flag is set to ON, permits the start of the prime mover when the authentication process is successful, and does not permit the start of the prime mover when the authentication process is unsuccessful.

2. The vehicular key system according to claim 1, further comprising:
an operation input unit that is mounted on the vehicle and receives an operation instruction by a user, wherein
the control device checks a state of the flag when the operation input unit is operated and set to a prime mover start permission position.

3. The vehicular key system according to claim 1 or 2, wherein
the control device sets the flag to OFF when the vehicle is in a locked state.

4. The vehicular key system according to any one of claims 1 to 3, wherein
the flag is set to OFF when it is determined that the communication with the mobile device is established, and
the start of the prime mover is permitted without executing the authentication process while the flag is set to OFF.
